# EUROPEAN PATENT APPLICATION

(11) **EP 0 671 218 A2**
(43) Date of publication of application: **13.09.1995**
(21) Application number: 95301391.9
(22) Date of filing: 03.03.1995
(51) Int. Cl.: B05B 9/04, B65B 31/10, C09K 3/30, B65D 83/14

(54) **Method of generating aerosol with environment-safeguarding liquefied gas as propellant**

(30) Priority: 07.03.1994 JP 59859/94
(71) Applicant: Nippon Tansan Gas Co., Ltd., Adachi-ku Tokyo-to, 120 (JP)
(72) Inventor: Takahashi, Masashi, Kashiwa-shi, Chiba-ken (JP); Ozaki, Yoji, Misato-shi, Saitama-ken (JP); Fumino, Ichiro, Nakano-ku, Tokyo (JP)
(74) Representative: Smith, Norman Ian

(57) **Abstract**

To permit aerosol generation apart from the restriction of rules and regulations, the aerosol generation being easy, ready, free from adverse effects on the environment and such that a mother substance is sprayed uniformly.

Mother substanse (4) is dissolved uniformly in environment-safeguarding liquefied gas (5) by sealing these substances in a small size, high pressure gas cartridge (1) of 100 cc or below. The cartridge (1) is opened to spray the mother substance (4) together with the environment-safeguarding liquefied gas by making use of the pressure of gasification of the liquefied gas (5). The liquefied gas is liquefied carbon dioxide or nitrogen suboxide gas. The mother substance (4) is charged directly if it is soluble to the phase of the environment-safeguarding liquefied gas (5). If the mother substance is a physically insoluble chemical substance, it is dissolved in a solvent, a fat, etc. using a dispenser before charging. If the mother substance is powder, it is commuted to 0.5 µm or below for suspension. The small size, high pressure gas cartridge (1) may be sealed by mounting a constant quantity valve in an opening (6) of the small size, high pressure gas cartridge.

## Description

### BACKGROUND OF THE INVENTION

### 1. Field of the Invention

This invention relates to a method of generating aerosol with environment-safeguarding liquefied gas as propellant and, more particularly, to a method, in which a mother substance and an environment-safeguarding liquefied gas are sealed in a small size vessel for dissolving or mixing the mother substance in or with the environment-safeguarding liquefied gas, and the mother substance is taken out as aerosol in constant quantities by making use of the gasification pressure of the environment-safeguarding liquefied gas.

### 2. Description of The Prior Art

Aerosol is sealed in a vessel with liquefied or compressed gas as propellant, and the mother substance in the vessel is taken out as aerosol through a nozzle or like valve. Aerosol has been in wide-spread use as cosmetics, paints, insecticides, deodorants, etc. and also in inhaling therapy method for the purposes of prevention or therapy of diseases (aerosol inhaling therapy method).

Aerosol is classified into two types, i.e., two-phase aerosol in case where the aerosol mother substance (effective component) can be dissolved in the propellant phase, and three-phase aerosol in which the mother substance and the propellant are insoluble to each other. As the propellant, liquefied gas such as furon, liquefied propane gas (LPG) , etc. is most spread, and further there are cases of using compressed gases of nitrogen (N₂), nitrogen suboxide (N₂O), carbon dioxide gas (CO₂), etc.

### (Problems to be Solved according to the Invention)

Problems in the prior art apparatus for and method of generation aerosol are as follows.

What is used most extensively as propellant (liquefied gas) are fulorinated alliphatic hydrocarbons. These hydrocarbons are most excellent in aerosol characteristics. However, it has been said that even a small quantity of them may lead to destruction of the ozone layer in the stratosphere or cause skin cancer. Their use, therefore, is not satisfactory. Further, recently, there are many accidents in the water-proof spray.

Compression gases of nitrogen (N₂), air, etc. used as compressed gas propellants are at about one half the compression ratio of the liquefied gas, and for securing the same volume a large vessel with double the volume is necessary. Besides, the dissolving of the mother substance can not be obtained for the sole purpose of obtaining the injection pressure, and the inner pressure is reduced for every use. Therefore, it is impossible to obtain optimum injection to guarantee a constant effect. Further, there have been environmental and economical problems due to excessive use.

The mother substance and propellant are sealed in a vessel. As the material of such vessel, metals, glass and plastic materials have been used extensively. The pressure of liquefied gas, i.e., furon, propane gas, etc., is restricted to about 6 kg/cm² or below, while that of compressed gas is restricted to about 8 kg/cm² (by High Pressure Vessel Regulations or the like). Therefore, applications to very limited other purposes than aerosol are impossible in view of the article diameter, grain size distribution, etc.

As a further aspect, the passage through which the propellant in the vessel is sent the outside, includes a valve. Such valve has been only of 10 kg/cm² or below, such as an actuator valve for spray can or a meater valve (constant quantity valve).

With the conventional spray (aerosol generator) either two-or three-phase aerosol has been obtainable depending on whether the propellant and mother substance are soluble.

Particularly, solid (powder) requires high pressure and high flow rate for taking it out, and it could not have been coped with by such a spray.

### SUMMARY OF THE INVENTION

It is an object of the present invention to provide a method of generating aerosol by sealing both a mother substance and environment-safeguarding liquefied gas in a small size, high pressure gas cartridge and causing the mother substance to be spray together will the environment-safeguarding liquefied gas by making use of the gasification pressure of said gas obtained by opening the cartridge.

Another object of the invention is to provide a method of generating aerosol, in which, when securing the same volume as of compression gases of nitrogen (N₂), air, etc., a cartridge of a half capacity with do and it is possible to readily obtain the dissolution or mixing of the mother substance in a threshold state.

A further object of the invention is to provide a method of generating aerosol, which is possible to maintain uniformity of aerosol.

A further object of the invention is to provide a method of generating aerosol, in which spraying of aerosol is possible owing to the charging in a gas cartridge of a chemical or the like having a physical property such as not soluble to the environment-safeguarding liquefied gas.

The foregoing objects and other objects as well as the characteristic features of the invention will become more apparent and more readily understandable by the following description and the appended claims when read in conjunction with the accompanying drawings.

The present invention presents means for accomplishing the above mentioned objects.

### (Means for Solving the Problems)

In the method according to the invention, a mother substance and an environment-safeguarding liquefied gas are sealed in a single small size, high pressure gas cartridge of 100 cc or below. The mother substance is dissolved or mixed uniformly in or with the environment-safeguarding liquefied gas. The cartridge is opened to cause the mother substance to be spray together with the environment-safeguarding liquefied gas by making use of the pressure resulting from the gasification of the environment-safeguarding liquefied gas. In this way, aerosol is generated.

The environment-safeguarding liquefied gas is liquefied carbon dioxide gas or liquefied nitrogen suboxide gas.

The mother substance may be a cosmetic, a coating material, an insecticide, a deodorant, a medical for inhaling, etc. and is capable of being dissolved in the phase of the environment-safeguarding liquefied gas.

The mother substance is a chemical having a physical property that it is not dissolved in the environment-safeguarding liquefied gas. Using a dispenser it is dissolved before its sealing in a solvant or fat which is soluble to the environment-safeguarding liquefied gas.

Further, the mother substance as solid is commuted to 0.5 µm or below for its suspension in the environment-safeguarding liquefied gas.

After the mother substance and environment-safeguarding liquefied gas have been charged in the small size, high pressure gas cartridge, these materials are sealed in the cartridge by mounting a constant quantity valve in an opening of the cartridge.

### (Functions)

The environment-safeguarding liquefied gas is charged and sealed together with an adequate quantity of mother substance in a small size, high pressure gas cartridge of 100 cc or below. The environment-safeguarding liquefied gas is a dissolving or mixing agent for converting the mother substance into aerosol. When the dissolution or mixing of the mother substance are made smoothly, it is no longer possible to distinguish the two- and three-phase aerosol types. Thus, it is made possible to obtain uniform take-out. Further, high pressure spraying is possible, and the grain size distribution and the grain diameter can be readily controlled. Further, since the High Pressure Vessel Regulation Law (noted before) is not applied, manufacture and handling are facilitated, and also size reduction is obtainable. By opening the cartridge, the mother substance is sprayed together with the environment-safeguarding liquefied gas, thus generating aerosol.

With the environment-safeguarding liquefied gas as liquefied carbon dioxide gas or liquefied nitrogen suboxide gas, it is possible to ensure about double the volume of compressed gas of nitrogen (N₂) or air. Further. with defuronization it is possible to obtain a propellant which is kind to the earth. Further, it is possible to readily obtain the dissolution or mixing of the mother substance in a threshold state (i.e., 31°C and 72.9 atm. in case of liquefied carbon dioxide gas and 36.5°C and 71.7 atm. in case of liquefied nitrogen suboxide).

Further, liquefied carbon dioxide gas can be utilized for the purposes of inhaling and bacteria suppression without fire hazardousness possibility.

Where the mother substance is a cosmetic, a paint, an insecticide, a deodorant, a medical agent for inhaling, etc. and capable of being dissolved in the phase of the environment-safeguarding liquefied gas, it is possible to maintain uniformity of aerosol.

Where the mother substance having a physical property such that it is not soluble to the environment-safeguarding liquefied gas is dissolved with a dispenser before the charging in a solvent or fat which are soluble to the environment-safeguarding liquefied gas, spraying of aerosol is possible owing to the charging in a gas cartridge of a chemical or the like having a physical property such as not soluble to the environment-safeguarding liquefied gas.

Where the mother substance is commuted into particles of 0.5 µm or below for its suspension in the environment-safeguarding liquefied gas, it is possible to obtain suspension of particles in the environment-safeguarding liquefied gas.

Where the mother substance and the environment-safeguarding liquefied gas are sealed in the small size, high pressure gas cartridge by mounting a constant quantity valve in an opening of the cartridge after charging the materials therein, it is possible to set a constant amount of charging.

The gas cartridge is made of a sufficiently pressure-bearing material, such as stainless steel (SUS), aluminum (Al), SS, etc. It is formed as a one-piece member by cold rolling, an impact process, etc., followed by rust prevention process on the inner surface. As soon as the gas cartridge is filled with mother substance, environment-safeguarding liquefied gas, etc., it is sealed by welding a safety sealer with local recess (as disclosed in Utility Model Registration No. 1572826) or by a calking process. Further, in place of such sealing method, a constant quantity valve which is used for take-out may be directly mounted.

The mother substance or mixing agent is converted to aerosol with the pressure of the environment-safeguarding liquid gas of propellant and sprayed. Where a constant quantity valve is available, a constant quantity of aerosol can be sprayed in a single operation.

### BRIEF DESCRIPTION OF THE DRAWINGS

Fig. 1 is a schematic view illustrating a method of aerosol generation using an environment-safeguarding liquefied gas according to the invention as propellant.

Fig. 2 is a schematic view illustrating a separate method of spraying according to Fig. 1.

Fig. 3 is a schematic view of a case where a small size, high pressure gas cartridge is replaced.

### DETAILED DISCRIPTIONS OF THE INVENTION

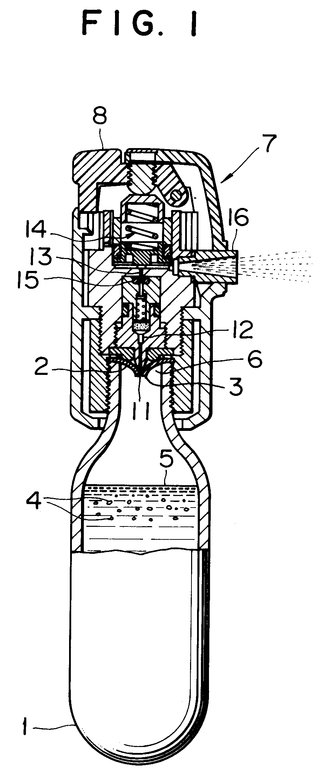

Referring to Fig. 1, a small size, high pressure gas cartridge 1 is formed usually as a one-piece member by deep rolling or impact process, followed by dust prevention or like inner surface treatment. Designated at 2 is a usual safety sealer with a central top or bottom portion thereof formed with a local recess 3 for causing rupture of the sealer when the inner pressure is increased. Designated at 4 is a mother substance in the form of particles or solution in a solvent. Since intrinsically it does not have any fixied shape, it is shown imaginary. Designated at 5 is environment-safeguarding liquefied gas as propellant, i.e., liquefied carbon dioxide gas or liquefied nitrogen suboxide gas. After filling the small size, high pressure gas cartridge 1 with the mother substance 4 and gas 5, these materials are sealed by welding the safety sealer 2 to the end of the opening 6 of the cartridge 1 or with a calking process.

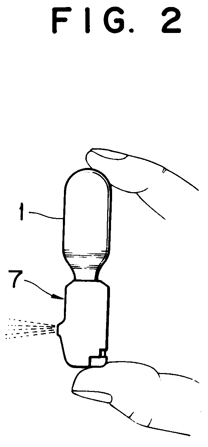

In use, as usual, the small size, high pressure gas cartridge 1 is mounted in an opener 7 and then opened, and then a button 8 is depressed to cause the content to be spray in the form of aerosol. It is possible as well to dispose the cartridge 1 and opener 7 vertically invertedly as shown in Fig. 2.

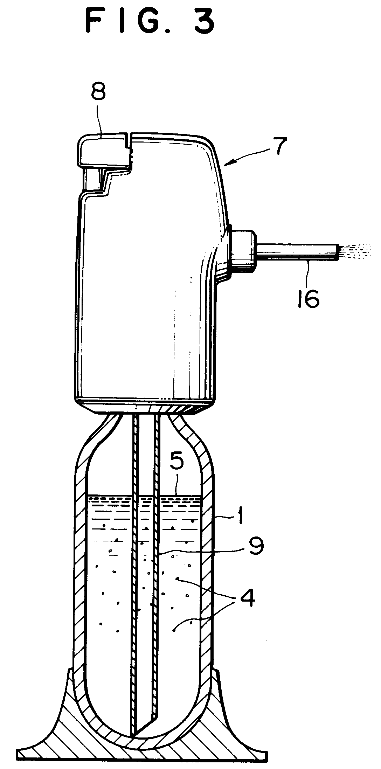

Fig. 3 shows a cartridge 1, which is large in size and accomodates a syphon tube 9. This structure is used in an upright state.

In either case, the opener 7 has a structure shown in Fig. 1 accompanying each of the specifications of Japanese Utility Model Lapid-open Publication No. Hei 5-14750 and Japanese Utility Model Lapid-open Publication No. Hei 5-30653 or a structure obtainable by omitting "nozzle case 34" at the right end of "tube 31", etc. from the structure of "valve body 2" shown in Fig. 1 accompanying the specification of Japanese Patent Publication No. Hei 4-334921.

With the small size. high pressure gas cartridge 1 mounted in the opener 7, the sealer 2 is opened by a needle 11, causing liquefied gas 5 containing mother substance 4 to flow into the passage 12 to raise the valve pin 13. By pushing the button 8 of pivotal type, the valve pin 13 is pushed down via the pressure regulation mechanism 14 to produce a clearance between the valve pin 13 and the O-ring 15. Liquefied gas 5 is caused to flow through the clearance toward the pressure regulation mechanism 14 to be spray out from the nozzle 16. By releasing the button 8, the flow-out is discontinued.

As the opener 7 may be used one with a constant quantity valve. In this way, it is possible to permit releasing of a constant quantity of aerosol by pushing and releasing the button 8 in a single operation.

### (Experiment)

As the gas cartridges were used those of various sizes ranging from 3 to 95 cc and each with a constant quantity valve. When a cartridge of 50 cc is filled with 0.1 g of mother substance (containing a solvent) and liquefied carbon dioxide gas, liquefied carbon dioxide gas was 32.5 g, and the concentration of aerosol was 0.3 w. %. The mother substance was confirmed in advance from its physical properties and with a transparent vessel or the like to be a homogenious mixture. Using this cartridge, spraying was made actually, and a prescribed quantity of spraying was recongnized.

Substance was stored as liquid in the measuring chamber of the constant quantity valve and is sprayed as gas. The rate of spraying of gas was about 30 Ncc per operation, and the spray gas had the character of the intended mother substance aerosol. Regarding the grain diameter and grain size distribution, high performance was recognized compared to the case of the conventional furon system.

Where the mother substance was solid (granular, crystalline, powdery), the grain diameter was set to 0.5 µm or below, or the substance was mixed with an environment-safeguarding liquefied gas. In some cases, supersonic waves were used. In either case, homogenious suspension could be obtained. The "spray" with an environment-safeguarding liquefied gas as propellant does not require distinction between the two- and three-phase types.

Pharnesol or araquinic acid as liquid, to which liquefied carbon dioxide gas is soluble, can be actually used as deodorant.

Further, plant oil or the like is a soluble substance and capable of actual use for household cooking.

Ethanol, from the disinfecting or sanitary standpoint, is capable of being used as additive to food.

Liquid, to which liquefied carbon dioxide is not soluble, for instance water, is capable of use for humidifying purposes.

Further, although not soluble to the coating material, by using a thinner as solvent for dissolution of the liquefied carbon dioxide gas, it is possible to obtain uniform take-out (spray).

### (Effects of the Invention)

According to the invention, irrespective of whether the mother substance is liquid or solid (powdery, granular or crystalline) and also irresective of whether the environment-safeguarding liquefied gas is soluble or insoluble to it, spraying in a uniform (predetermined) grain size distribution, a uniform grain diameter and a constant quantity with the environment-safeguarding liquefied gas as propellant.

Further, since furon or liquefied propane gas is not used, the method according to the invention is suited for the safeguarding of the groval environment, permitting elimination of influence on the human body and ensurance of the safety at the time dealing.

Further, unlike the case with compressed gas, there is no pressure attenuation, and constant quantity spraying is possible up to the last, thus permitting maintenance of the purposes and effects and prevention of excess spraying.

High pressure spraying permits distribution control of any fine particles, and it is possible to obtain reliable effects to meet multiple purposes.

The vessel can be reduced in size (specific volume) so that it is readily portable and rigid in structure. Further, its rupture is avoided with the safety device (i.e., safety sealer), and it can be readily discarded.

According to claims 2 and 3, carbon dioxide gas propellant can be used for beer or like carbonic acid drink or for food, and it is clean and safe. Liquefied nitrogen suboxide gas has anesthetic effects.

According to claim 4, the mother substance is directly dissolved in or mixed with the environment-safeguarding liquefied gas, thus permitting the maintenance of the homogenity of aerosol.

According to claim 5, the dissolution or mixing can be easily obtained with a mother substance having a character such as to difficultly permit dissolution or mixing of the environment-safeguarding liquefied gas.

According to claim 6, the mother substance in the form of particles can be sufficiently suspended in the environment-safeguarding liquefied gas.

According to claim 7, it is possible to maintain a constant quantity of spraying in a single operation.

## Claims

1. A method of generating aerosol with environment-safeguarding liquefied gas as propellant, comprising the steps of causing dissolution or mixing of a mother substance (4) uniformly in or with an environment-safeguarding liquefied gas (5) by sealing both the mother substance (4) and the environment-safeguarding liquefied gas (5) in a small size, high pressure gas cartridge (1) of 100 cc or below, and causing the mother substance (4) to be spray together with the environment-safeguarding liquefied gas by making use of the gasification pressure of the environment-safeguarding liquefied gas (5) obtained by opening the cartridge (1).

2. The method of generating aerosol with environment-safeguarding liquefied gas as propellant according to claim 1, wherein the environment-safeguarding liquefied gas (5) is liquefied carbon diodixd gas.

3. The method of generating aerosol with environment-safeguarding liquefied gas as propellant according to claim 1, wherein the environment-safeguarding gas (5) is liquified netrogen suboxide gas.

4. The method of generating aerosol with environment-safeguarding liquefied gas as propellant according to claim 1, wherein the mother substance (4) is a cosmetic, a paint, an insecticide, a deodorant, an inhaling chemical, etc. and soluble to the phase of the environment-safeguarding liquefied gas (5).

5. The method of generating aerosol with environment-safeguarding liquefied gas as propellant according to claim 1, wherein the mother substance (4) is a chemical insoluble to the environment-safeguarding liquefied gas (5) and filled after being dissolved by a dispensing agent in a solvent, fat, etc. which are soluble to the environment-safeguarding liquefied gas (5).

6. The method of generating aerosol with environment-safeguarding liquefied gas as propellant according to claim 1, wherein the mother substance (4) is commuted into fine paricles of 0.5 µm or below for suspension in the environment-safeguarding liquefied gas (5).

7. The method of generating aerosol with environment-safeguarding liquefied gas as propellant according to claim 1, wherein the sealing of the mother substance (4) and environment-safeguarding liquefied gas (5) is made by mounting a constant quantity valve on an opening (6) of the small size, high pressure gas cartridge (1) after filling the small size, high pressure gas cartridge (1) with the mother substance (4) and environment-safeguarding liquefied gas (5).
